Europäisches Patentamt

European Patent Office

Office européen des brevets

(11) Veröffentlichungsnummer : **0 156 166**
**B1**

(12) # EUROPÄISCHE PATENTSCHRIFT

(45) Veröffentlichungstag der Patentschrift :
11.10.89

(21) Anmeldenummer : 85101888.7

(22) Anmeldetag : 21.02.85

(51) Int. Cl.⁴ : **A 23 C   9/18**, **A 23 L   1/305**, **A 23 L   1/314**, **A 23 L   1/325**, **A 23 C   9/123**

(54) **Milch-Fleisch-Produkte.**

(30) Priorität : 21.02.84 CH 818/84

(43) Veröffentlichungstag der Anmeldung :
02.10.85 Patentblatt 85/40

(45) Bekanntmachung des Hinweises auf die Patenterteilung : 11.10.89 Patentblatt 89/41

(84) Benannte Vertragsstaaten :
AT BE CH DE FR GB IT LI LU NL SE

(56) Entgegenhaltungen :
EP--A-- 0 009 219
DE--A-- 2 639 177
FR--A-- 2 156 854
GB--A-- 2 018 123
US--A-- 2 560 621
US--A-- 2 565 098
JOURNAL OF FOOD SCIENCE, Band 47, Nr. 1, Januar/Februar 1982, Seiten 234-239, Chicago, Illinois, US; G. OZIMEK u.a.: "Influence of an addition of textured milk proteins upon physicochemical properties of meat mixtures"

(73) Patentinhaber : **Interproduct IP AG**
**Baarerstrasse 36**
**CH-6300 Zug (CH)**

(72) Erfinder : **Laufer, Wolfgang, Dr.**
**Birkenweg 16**
**D-8130 Starnberg-Percha (DE)**
Erfinder : **Hohenester, Hermann, Dr.**
**Strass 21**
**D-8261 Burgkirchen (DE)**

(74) Vertreter : **Laufer, Wolfgang, Dr.**
**Patentanwalt Dipl.-Chem. Dr.rer.nat. Wolfgang Laufer**
**Birkenweg 16**
**D-8130 Starnberg 3 (DE)**

## Beschreibung

Die Erfindung betrifft neuartige, energie- und nährwerteinstellbare sowie ernährungsphysiologisch verbesserte Milch-Fleischprodukte (kurz MM-Produkte « mit Milch » genannt), die mittels einer innovativen Herstellungstechnologie produziert werden. Mit Hilfe dieser neuen, als MM-Technologie bezeichneten Herstellungstechnologie kann eine breitgefächerte Produktgruppe von auf Milchbasis beruhender Lebensmittel erzeugt werden.

Die Zusammensetzung und der Kaloriengehalt der neuen Milch-Fleischprodukte kann durch die Wahl und die Bearbeitung der Ausgangsstoffe wunschgemäß programmiert werden, so daß sowohl Produkte mit hohem, als auch mit niedrigem Brennwert hergestellt werden können, die jedoch immer einen hohen Nährwert besitzen.

Eine bevorzugte Produktgruppe im Rahmen der neuen MM-Produkte zeichnet sich durch einen sehr niedrigen Fettgehalt und einen stark reduzierten Brennwert (kalorienarme MM-Produkte) aus, in Relation zu vergleichbaren, auf dem Markt angebotenen Erzeugnissen.

Der MM-Produkte-Idee, dem Konzept und der Entwicklung der MM-Produkte lag die Tatsache zugrunde, daß in einigen Industriestaaten im Durchschnitt über 50% der Bevölkerung übergewichtig sind und unter den damit zusammenhängenden gesundheitlichen Folgen leiden, ein großer Teil dieser Verbraucher das Übergewicht abbauen möchte, jedoch auf die Menge der verzehrten Speisen und den entsprechenden Genuß nicht verzichten möchte. In diesem Zusammenhang war und ist wesentlich, daß der Gesamtfettverbrauch seit über 12 Jahren trotz diverser Empfehlungen bezüglich gesunder Ernährung unverändert hoch geblieben ist. Dieser beruht weiterhin hauptsächlich auf einer hohen Fettaufnahme von bei der Herstellung und Zubereitung versteckten Fettstoffen in Wurst- und Fleischerzeugnissen.

Mit den MM-Produkten wurden neuartige, vornehmlich kalorien- und fettreduzierte, jedoch nährwertverbesserte und im Aussehen, Geschmack und Konsistenz den vergleichbaren herkömmlichen Erzeugnissen entsprechende Lebensmittel geschaffen, die mittels eines innovativen, Herstellungsverfahrens produziert werden.

Ein bevorzugte Produktgruppe im Rahmen der neuen MM-Produkte zeichnet sich durch einen sehr niedrigen Fettgehalt (ca. 3-7 g/100 g) und einen stark reduzierten Brennwert (ca. 80-130 kcal/100 g) aus im Vergleich zu auf dem Markt angebotenen vergleichbaren Erzeugnissen. Mittels der MM-Herstellungstechnologie ist es möglich die große Vielfalt des üblichen Nahrungsmittel-Sortenangebots weitgehend beizubehalten.

Die nach der neuen Technologie hergestellten, in der Nährwert- und Wirkstoffzusammensetzung vielseitigen und ausgewogenen MM-Produkte sind weitgehend naturbelassen, da keine chemisch bearbeiteten Rohstoffe oder chemisch hergestellte Zusätze verwendet werden.

Es ist bekannt, daß die Qualitätserwartungen bei den immer gesundheitsbewußter werdenden Konsumenten trotz stagnierender Einkommen im Ansteigen sind. Die MM-Produkte kommen insbesondere dem Interesse des Verbrauchers nach kalorienarmen, jedoch gleichwertigen und wohlschmeckenden Produkten aus Fleisch- und Milchbestandteilen entgegen.

Für die Schaffung und das Inverkehrbringen der MM-Produkte liegt also vor allem ein wesentliches und berechtigtes Interesse auf Seiten der Verbraucher vor, auch aklorienarme und gleichzeitig nährwertverbesserte, jedoch preiswerte Lebensmittel auf Milch/Fleischbasis anstelle herkömmlicher im Prinzip Fett/Fleischerzeugnisse angeboten zu erhalten.

Die MM-Produkte sowie die MM-Technologie sind auch in Form spezieller Modifikationen von besonderer Bedeutung bei Ihrer Verwendung bei der Nahrungsmittelhilfe und bei landwirtschaftlichen- und nahrungsmitteltechnischen Entwicklungsprogrammen.

Die neue MM-Technologie läßt sich auch für die Herstellung neuartiger Futtermittel für die Tier- und Fischfütterung verwenden.

In den folgenden Tabellen werden Übersichten über die MM-Produkte gegeben, wobei je nach Zusammensetzung der Ausgangsmaterialien und Verfahrensführung Produkte der ENE-Modifikation (energie- und nährwerteingestellte) oder MM-Produkte der KFA-Modifikation (kalorien- und fettarm) erzeugt werden können.

In den weiter folgenden tabellarischen Zusammenfassungen werden die Nährstoffzusammensetzungsmöglichkeiten der MM-Produkte sowie ein Vergleich der Zusammensetzung und der Energiegehalte z. B. mit herkömmlichen Wurstwaren und Frischfleisch dargestellt.

MM-Produktübersicht

| Allgemeine Eigenschaften | Modifikation | Spezifische Eigenschaften |
|---|---|---|
| Programmierbare, vielseitige Zusammensetzungsmöglichkeiten auf Milch- und Fleischbasis<br><br>Hohe biologische Wertigkeit aufgrund komplexer Zusammensetzungen<br><br>Keine chemischen Zusätze sowie keine Verwendung chemisch behandelter Substanzen wie Bindemittel, Emulgatoren, Konservierungsmittel.etc.<br><br>Herstellung in Art von Brüh- und Kochwurst | ENE | - Energie- und nährwerteinstellbar<br><br>- Gezielt einstellbare Zusammensetzung entsprechend ernährungsphysiologischer und/oder regionaler Erfordernisse unter Verwendung lokaler Rohstoffe<br><br>- Gute Verträglichkeit aufgrund der Abbindung einzelner Komponenten<br><br>- Verwendung insbesondere in Entwicklungs- und Schwellenländern mit Mangel- und Fehlernährung |
| Geschmack und Konsistenz wie herkömmliche vergleichbare Erzeugnisse<br><br>Herstellung in Form von Frischprodukten, Konserven oder in Trockenform<br><br>Vermarktung als allgemeine Lebensmittel sowie als spezielle Diätprodukte<br><br>Verwendung von überschüssigen Milch- und Rindfleischerzeugnissen<br><br>Preiswerte Produkte<br><br>Verbesserte Haltbarkeit | KFA | - Kalorien-, fett- und Cholesterinarm mit ca. 80-140 Kcal., ca. 3,5-8% Fett und 30-35 mg Cholesterin auf 100 g MM-Produkt<br><br>- ausgewogenere und nährwertverbesserte Zusammensetzung (im Vergleich zu herkömmlichen Milch- und Wursterzeugnissen)<br><br>- Austauschmöglichkeiten von gesättigten Fettsäuren durch ungesättigte Fettsäuren<br><br>- reduzierter NaCl-Gehalt, erhöhter Calciumgehalt<br><br>- Verwendung insbesondere in Ländern mit allgemeiner Über- und Fehlernährung |

EP 0 156 166 B1

**EP 0 156 166 B1**

Übersicht von Nährstoffzusammensetzungsmöglichkeiten der MM-Produkte

A. Kalorien- und fettarme MM-Standardmodifikationen (KFA) (Einsatz als energiereduzierte/energiearme, der Normalkost angenäherte Mischkost).

1. Proteine, Fette, Kohlenhydrate, Vitamine, Mineralstoffe und Spurenelemente des Rindfleisches, Schweinefleisches und/oder sonstiger Fleischkomponenten (vorzugsweise mageres Fleisch).
2. Proteine, Fette, Kohlenhydrate, Vitamine, Mineralstoffe und Spurenelemente der Milchkomponenten (vorzugsweise Magermilch).

B. Energie- und nährwerteinstellbare MM-Modifikationen (ENE) (Einsatz als bedarfsgerechte/bedarfseinstellbare, energie-eingestellte Mischkost oder spezifisch bezüglich der Inhaltsstoffe eingestellte Diätkost)

1. Proteine, Fette, Kohlenhydrate, Vitamine, Mineralstoffe und Spurenelemente des Rindfleisches, Schweinefleisches und/oder sonstiger Fleischkomponenten.
2. Proteine, Fette, Kohlenhydrate, Vitamine, Mineralstoffe und Spurenelemente der Milchkomponenten.
3. Öle mit hohem Gehalt an einfachen und mehrfachen ungesättigten Fettsäuren.
4. Proteine, Fette, schnell/leicht und/oder langsam/schwer verdaubare und resorbierbare ballaststoffreiche Kohlenhydrate, Proteine, Fette, Vitamine, Mineralstoffe und Spurenelemente von pflanzlichen Komponenten.
5. Proteine, Fette, Kohlenhydrate, Vitamine, Mineralstoffe und Spurenelemente von Fisch- oder Crustaceenkomponenten.

(Siehe Tabelle Seite 5 f.)

Die allgemeine Marktsituation auf den Gebieten der Fleischwirtschaft und Milchwirtschaft hat keine zufriedenstellende Entwicklung genommen. Es ist bekannt, daß der Fleisch- und auch der Milchkonsum seit einiger Zeit stagniert und mit der aus bekannten Gründen stetig steigenden Produktion Insbesondere der Milch nicht mehr Schritt hält.

Ursachen dafür sind zum Beispiel, daß das Fleisch teuer ist, eine nennenswerte Steigerung des Milchabsatzes weiterhin an der eingeschränkten Akzeptanz breiter Bevölkerungsschichten gegenüber diesem wertvollen Nahrungsmittel scheitert, in der letzten Zeit nur sehr wenige, neue wohlschmeckende Produkte einen zusätzlichen Verbrauch angeregt haben und durch ein wohl auf Mißverständnissen beruhendes Diätbewußtsein ein bevorzugter Trend zu vegetabiler Diät- und Schonkost ausgelöst worden ist.

Eine Alternative zum Fleischverbrauch ist zur Zeit darin zu sehen, dem Verbraucher schmackhaft zubereitete wurstartige Produkte preiswerter anzubieten. Jedoch entsprechen fast sämtliche Wurstsorten (mit Ausnahme von Geflügelpasteten und Sülzproudkten) der herkömmlichen Zusammensetzung nicht den fundierten Empfehlungen, kalorien- und fettärmere Nahrungsmittel zu verzehren.

In der letzten Zeit haben nur sehr wenige, recht durchschnittlich schmeckende Produkte zu einem geringen Verbrauch angeregt und durch ein wohl auf Mißverständnissen beruhendes Diätbewußtsein besteht ein gewisser Trend zu vegetabiler Diät- und Schonkost, der jedoch auf einen Vertrieb durch Drogerien und Reformhäuser beschränkt bleibt.

Der umsatzschwache Markt für kalorienreduzierte Erzeugnisse wird unglücklicherweise als Teilmarkt in den Gesamtmarkt für Schlankheitserzeugnisse und -präparate eingeordnet und hat solchen Produkten zu einem gewissen Negativimage verholfen. Leider haben Erzeuger und Handel solchen Schonkosterzeugnissen (bis auf wenige Ausnahmen) nur geringes Interesse entgegengebracht.

Die Herstellung von Wurst ganz allgemein diente von alters her zum Zwecke, in den Fleischereibetrieben entstehende überschüssige Fette (Schmalz, Speck, Talg udgl.) in möglichst ansprechender, aber eben in « verarbeiteter » Form an den Verbraucher zu bringen. Die sozialen, wirtschaftlichen und ernährungsphysiologischen Bedingungen haben sich jedoch in der Zwischenzeit und insbesondere in den letzten Jahren grundlegend geändert. Die Menschen arbeiten im allgemeinen nicht mehr so schwer körperlich. Fettstoffe werden nicht mehr in dem Umfang benötigt und sind in zu großen Mengen eingenommen schädlich für den Stoffwechsel der Menschen. Der Bedarf verlagert sich somit von der Quantität zur Qualität, d. h. zum physiologischen Wert der Nahrungsfette.

Die derzeitige Tendenz zum « besseren » Schweinefleisch, durch Züchtung eines « gesünderen » Schweins mit mehr Fett und Speck, läuft einigen ernährungsphysiologischen Erkenntnissen entgegen, da zwangsläufig Herstellung, Angebot und Verbrauch von fetter Wurst ansteigen wird.

Die bisherige konträre Vermarktung von Fleisch und Milch läßt also kaum Verbrauchssteigerungen zu. Ein zusätzliches Angebot von neuartigen, preiswerten und ernährungsphysiologisch verbesserten Mischprodukten auf der Basis von Milch und Fleisch mit geringerem Fett- und Kaloriengehalt kann sowohl den Fleisch- bzw. Wurstkonsum als auch den Milchkonsum beträchtlich erhöhen aufgrund einer Steigerung der Akzeptanz dieser Produkte.

4

| Vergleich einiger Inhaltsstoffe sowie der Nahrungsenergie | | | |
|---|---|---|---|
| Gehalt je 100 g | herkömmliche Wurstwaren | MM-Produkte(KFA) | Frischfleisch |
| Fettstoffgehalt | ca. 25 - 50 g | ca. 5 - 10 g | ca. 7 - 30 g |
| Durchschnittlicher Fettstoffgehalt | 33 g | 7 g | 19 g |
| Proteingehalt | ca. 10 - 16 g | ca. 12 - 18 g | ca. 17 - 21 g |
| Durchschnittlicher Proteingehalt | 12 g | 13 g | 18 g |
| Kohlenhydratgehalt | - | ca. 2 - 5 g | - |
| Durchschnittlicher Kohlenhydratgehalt | - | 3 g | - |
| Energiegehalt aus Fettstoffen | 297 kcal | 63 kcal | 171 kcal |
| Energiegehalt aus Proteinen | 48 kcal | 52 kcal | 72 kcal |
| Energeigehalt aus Kohlenhydraten | - | 12 kcal | - |
| Durchschnittliche Gesamtenergie | 345 kcal | 127 kcal | 243 kcal |
| Cholesteringehalt | ca. 85 - 100 mg | ca. 30 - 35 mg | ca. 70 - 110 mg |

EP 0 156 166 B1

Der vorliegenden Erfindung lag die Aufgabe zugrunde auf der Basis von Milch und Fleisch ernährungsphysiologisch hochwertige Lebensmittelprodukte herzustellen.

Maßnahmen gegen die ungesunde Ernährung der Bevölkerung bestanden bisher im wesentlichen darin, durch mannigfaltige Diätvorschläge gesundheitserzieherischen Einfluß auf das Ernährungsverhalten der Bevölkerung zu nehmen. Jedoch ist das Marktangebot an bedarfsangepaßten und dennoch wohlschmeckenden Wurstwaren, Pasteten und dergleichen äußerst gering.

Obwohl auf dem Markt einige diätetische Produkte (meist vegetabiler Herkunft) angeboten werden, die meist mittels komplizierter Verfahren und oft mit chemischen Bearbeitungen hergestellt werden, konnten bisher keine den MM-Produkten gleichwertigen Erzeugnisse mit der besonders vorteilhaften ernährungsphysiologischen Zusammensetzung aufgefunden werden.

Primär handelt es sich um lactovegetabile Produkte, die kaum Vorteile bezüglich einer Brennwertreduzierung bringen. Eine gewisse Fett- und Kalorienreduzierung wurde bei einigen wenigen Wurstwaren durch Ersatz des Fettes und Speckes durch mageres Fleisch erreicht. Solche Erzeugnisse sind naturgemäß sehr teuer (ca. SFr. 20, -bis SFr. 30,-/kg).

Aufgrund der oben geschilderten Ernährungssituation sowie unter Berücksichtigung der verschiedenen von der Fachwelt vorgeschlagenen ernährungstherapeutischen Konzepte lag dem vorliegenden Projekt die Aufgabe zugrunde, ein breitgefächertes Angebot von in der Zusammensetzung kalorienarmen und ernährungsphysiologisch ausgewogeneren Produkten zu schaffen, die den herkömmlichen Erzeugnissen dieser Art in Konsistenz und Geschmack mindestens entsprechen, jedoch im Nährwert wesentliche Verbesserungen aufzeigen.

Es ist bekannt, daß verbesserte Milch-Fleischprodukte hergestellt werden können, indem gefrorene Milch im Kutter zusammen mit Fleisch und Phosphaten zu Wurstwaren verarbeitet werden kann (FR-A-2 156 854).

Weiterhin ist bekannt, daß Magermilch zusammen mit aufgeschlossenem Milcheiweiß und Fleisch zu Wurstwaren verarbeitet werden können (DE-A-26 39 177). Jedoch ist die Verwendung von Phosphaten in Wurstwaren und in Lebensmitteln allgemein nicht erwünscht und der Anteil des einsetzbaren aufgeschlossenen Milcheiweißes ist stark begrenzt aufgrund der Tatsache, daß dieses separierte Milcheiweiß zu unverwünschten Konsistenzen, meist zu einer zu harten Textur der damit hergestellten Produkte führt und oft zu nachteiligen Geschmacksveränderungen.

Die Erfindung betrifft daher ein Verfahren zur Herstellung von weitgehendst naturbelassenen, energie- und nährwerteinstellbaren Milch-Fleischprodukten auf der Basis von Milch, Milcherzeugnissen, Fleisch, Fleischerzeugnissen, gegebenenfalls unter Zusatz von Obsterzeugnissen, Getreideerzeugnissen und anderen Lebensmitteln, dadurch gekennzeichnet, daß die Milch-Fleischprodukte ohne Verwendung chemisch bearbeiteter oder chemisch hergestellter Ausgangsstoffe und ohne Zusatz von Bindemitteln, Emulgatoren und Dickungsmitteln hergestellt werden, indem eine Grundemulsions/Grundmischungs-Zutat auf der Basis von Milch oder einer Milchemulsion sowie Vollmilch- oder Magermilchpulver und gegebenenfalls eine Lipidkomponente in einem Kutter oder einer anderen gründlich emulgierenden und/oder homogenisierenden Vorrichtung bearbeitet, emulgiert und homogenisiert wird, die so erzeugte Grundemulsion gründlich gefroren und anschließend zerkleinert wird, eine oder mehrere dieser Grundemulsionen in einem Kutter oder einer anderen geeigneten Vorrichtung mit einer charakterisierenden Zutat auf Fleisch- und/oder Fisch- und gegebenenfalls Milch- und/oder Getreide- und/oder Gemüse und/oder Obst und sonstiger Nährmittelbasis und gegebenenfalls unter Zusatz von Salzen, Gewürzen und Geschmacksstoffen vermischt werden, und das in dieser Weise hergestellte Milch-Fleischprodukt in üblicher Weise zu Frischprodukten, Produkten mit begrenzter Haltbarkeit, Konserven, tiefgekühlten Produkten oder Trockenprodukten weiterverarbeitet wird.

Eine bevorzugte Ausführungsform des Verfahrens ist dadurch gekennzeichnet, daß jeweils die Grundemulsionszutat und die charakterisierende Zutat und bei Vermischung 98 % bis 2 % der Grundemulsions-Zutat und 2 % bis 98 % der charakterisierenden Zutat in einem je nach Zusammensetzung und Eigenschaften der Zutaten geeigneten Temperaturbereich von + 10° Celsius bis —20° Celsius bearbeitet/verarbeitet werden.

Eine weitere bevorzugte Ausführungsform des Verfahren zur Herstellung eines Milch-Fleischproduktes ist dadurch gekennzeichnet, daß ein Kutter oder ein Vakuumkutter oder ein Kutter/Vakuumkutter mit Kühl- und Gefriervorrichtung als Hauptverarbeitungsvorrichtung verwendet wird.

Die Erfindung betrifft weiterhin die nach dem erfindungsgemässen Verfahren hergestellten Milch-Fleischprodukte, die dadurch gekennzeichnet sind, daß sich diese aus 2 % bis 50 % Proteinen, 2 %-25 % Lipiden, bestehend aus tierischen oder pflanzlichen Lipiden, 2 %-25 % Kohlenhydraten, bestehend aus Milch-, Pflanzen- oder sonstigen Kohlenhydraten und gegebenenfalls aus Restwasser zusammensetzen.

Die Erfindung betrifft insbesondere Milch-Fleischprodukte bestehend aus 8 %-18 % Proteinen, 2 %-9 % Lipiden sowie 2 %-9 % Kohlenhydraten und Restwasser.

Bevorzugt sind ferner Milch-Fleischprodukte mit einem Kaloriengehalt unter 100 Kcal/100 g Produkt, einem Fettgehalt von ca. 3,5 % und einem Cholesteringehalt von ca. 30-35 mg/100 g Produkt die hergestellt werden, wie vorstehend beschrieben, aus ca. 60 Anteilen gefrorener fettarmer Milch- und/oder Vollmilchzutat (unter 0,5 bis 3,5 % Fett) als Grundemulsion und ca. 40 Anteilen gefrorener charakterisierender Zutat, bestehend aus ca. 80 % sehr magerem (vorzugsweise frisch geschlachtetem) Rinds- oder Wildfleisch (ca. 2 %-4 % Fett) und ca. 20 % fettarme Milch (ca. 0,5 bis 1,5 % Fett).

Die Erfindung betrifft ebenfalls die Verwendung einer aus einer gründlich homogenisierten und anschließend gefrorenen, aus Milch, Milchpulver, Lipiden, gegebenenfalls weiteren Nährstoffen und Wasser bestehenden und in einem Kutter oder in einer anderen geeigneten, die Struktur verändernden emulgierenden und homogenisierenden Vorrichtung hergestellten Grundemulsion für die Produktion von Milchprodukten, Wurstprodukten, Fischprodukten, Pasteten oder Lebensmitteln oder Futtermitteln jeder Art mit verbessertem Geschmack und Nährwert sowie mit verbesserter Konsistenz und Haltbarkeit als Ersatz für die sonst übliche und herkömmliche Verwendung von Mischungen aus Speck/Fett/Wasser oder Mischungen aus Speck/Fett/Wasser und aufgeschlossenem Milcheiweiß und sonstigen Emulgatoren, Bindemitteln, Dickungsmitteln und dergleichen.

Die Erfindung betrifft weiterhin die Verwendung einer Grundemulsionszutat, wie vorstehend angegeben, in feinst zerkleinerter und/oder grobkörnig zerkleinerter Form und/oder in Form von strukturierten Teilchen für die Herstellung von Lebensmitteln und Futtermitteln jeder Art und vorzugsweise von energie- und nährwerteinstellbaren Nahrungsmitteln bestehend aus Milch-, Fleisch-, Fisch-, Meerestier-, Gemüse-, Obst oder anderen Nahrungsmittelbestandteilen.

Aufgrund der speziellen und modifizierbaren MM-Technologie lassen sich je nach Bedarf die verschiedensten MM-Produkte herstellen, die Fleisch und Milch als Hauptzutaten enthalten, jedoch bei der Verwendung von üblichen Anteilen Fleisch einen vorwiegend wurst- oder pastetenartigen Charakter besitzen.

Da die herkömmlichen Wurst- und Pastetenprodukte aufgrund ihrer Herstellung meist Fettgehalte von 25 % bis weit über 50 % und Energiegehalte zwischen 250 kcal bis über 500 kcal/100 g enthalten, sollen bei der technologischen Produktentwicklung eine über 50 % liegende Brennwert- und Fettgehaltsreduzierung, eine Verbesserung des Gehaltes an essentiellen Nährstoffen, eine gute Konsistenz, ein guter Geschmack sowie eine gute Haltbarkeit erreicht werden.

Wie vorstehend beschrieben, können nun mit herkömmlichen Brüh- und Kochwursterzeugnissen vergleichbare, MM-Produkte hergestellt werden die Fettgehalte zwischen 5-10 % und Brennwerte zwischen 90-140 kcal besitzen, wodurch die sonst üblichen Brennwerte wesentlich reduziert wurden. Dies obwohl in Fachkreisen eine Brennwertverminderung bis zu 40 % nicht für möglich gehalten wird, ohne angeblich die sensorische Qualität aufgrund fehlender Fett- und Speckanteile so zu verändern, daß sie vom Verbraucher abgelehnt wird. Die Behauptung, daß die üblichen Wurstprodukte mit weniger als 15 % Fett « lasch » schmecken, wurde widerlegt.

Aufgrund der MM-Technologie werden Milch (Vollmilch oder Magermilch) und Vollmilchpulver oder Magermilohpulver in Mengen bis zu 90 Antellen der zwei Hauptzutaten Milch und Fleisch verwendet. Spezielle Zusätze wie z. B. Bindemittel und dergleichen sind bei dem MM-Verfahren nicht erforderlich.

Bei den MM-Produkten ergänzen sich die Milch- und Fleischbestandteile vorteilhaft in Bezug auf Aminosäuren und Fettsäuren (insbesondere essentielle Aminosäuren und Fettsäuren), Vitamine, Mineralstoffe und Spurenelemente.

Da die MM-Produkte in ihrer Zusammensetzung regelrecht « programmiert » werden können, ist z. B. auch eine Einarbeitung von Lipidkomponenten mit zusätzlichen essentiellen gesättigten und ungesättigten Fettsäuren möglich. Abgesehen von dem publizistischen Wettstreit auf dem Pflanzenfett-(Soja-) und Tierfett-(Milchfett-) Markt ist es weitgehend eine physiologische Tatsache, daß von den pflanzlichen Fetten nur Weizenkeimöl oder Sonnenblumenöl wegen des hohen Gehaltes an Vitamin E (antioxidative Wirkung, Sauerstoff-Ersparnis für das Myocard) diätetisch bzw. ernährungsphysiologisch von Vorteil sind.

Die herkömmlichen Wurst- und Pastetenerzeugnisse sind im Prinzip Fett-/Fleisch-Mischerzeugnisse, bei denen fast durchwegs ein bedeutend höherer Fettgehalt als Proteingehalt (Eiweißstoffe) vorhanden ist. Bei den MM-Schonkostprodukten ist dagegen der Proteingehalt bedeutend höher als der Fettgehalt und die Produkte sind dennoch wohlschmeckend.

Die von der Fachwelt allgemein aufgestellte Behauptung, daß das Wasserbindungsvermögen und die Fettemulgierung bei der Fleischverarbeitung bzw. bei der Wurstherstellung in einem komplizierten kolloidalen System wie es z. B. das Brühwurstbrät darstellt, vom Verhältnis von Fett, Wasser und Eiweiß im Brät abhängt und kein oder sehr wenig Fett (unter 25 %) Bräte mit sehr viel Geleeabsatz und nachteiligen sensorischen Eigenschaften ergibt, hat sich bei den nach dem MM-Verfahren hergestellten Produkten als nicht relevant herausgestellt.

Weiterhin konnte festgestellt werden, daß sich ein Zusatz von speziellen Bindemitteln und Fettemulgatoren wie z. B. aufgeschlossenem Milcheiweiß erübrigt, da bei dem MM-Verfahren natürliche, inhärente Bindefähigkeiten der tierischen Produkte Milch und Fleisch initiiert und genutzt werden.

Die MM-Produkte sind in gewisser Weise mit magerem Rindfleisch und magerem Schweinefleisch zu vergleichen, da sie ähnliche Protein-, Fett- und Wassergehalte besitzen. Aufgrund der Mitverarbeitung sämtlicher wertvoller Komponenten der Vollmilch wird trotz der niedrigen Kalorienzahl ein gegenüber mageren Fleischsorten verbesserter Nährwert und eine hohe biologische Wertigkeit erreicht.

Spezielle Produktversuche haben weiterhin ergeben, daß mit Hilfe von modifizierten MM-Verfahrensweisen insbesondere für Entwicklungsländer geeignete Produkte geschaffen werden können, die einen hohen aber ausgewogenen und an die regionalen Verhältnisse angepaßten Nährwert besitzen. Diese preiswert herstellbaren MM-Produkte zeichnen sich insbesondere dadurch aus, daß gewisse ernährungsphysiologische Unverträglichkeiten aufgrund der Verarbeitung ausgeschaltet werden können. Ein in

EP 0 156 166 B1

Vollkonserven herstellbares MM-Standardprodukt kann z. B. kalt, gebraten, gegrillt oder gekocht verzehrt werden und führt in geeigneter Zusammensetzung dem Konsumenten eine breite Palette essentieller Nährstoffe zu.

Die nach der neuen MM-Technologie hergestellten Milchzubereitungen zeigen hervorragende Eigenschaften und können im wesentlichen als pastetenartige Produkte mit ausgezeichneten ernährungsphysiologischen Eigenschaften definiert werden.

Die MM-Produkte können als schnittfeste oder streichfähige Produkte hergestellt werden, die sowohl im kalten als auch im erwärmten Zustand, also gekocht, gebraten und dergleichen angerichtet werden können.

Der gewünschte Gehalt an Eiweißstoffen, Fetten, Kohlenhydraten, Wasser, Vitaminen, Mineral- und Spurenstoffen läßt sich ohne besondere Schwierigkeiten einstellen, also sozusagen programmieren. So lassen sich Ballaststoffe, als auch Fette mit einem speziellen Gehalt an ungesättigten Fettsäuren und weitere essentielle Bestandteile ohne Schwierigkeiten einarbeiten.

Eine Standardproduktgruppe (z. B. Frühstücksfleisch, Gelbwurst, Mortadella, Fleischwurst, Schinkenwurst, Leberwurst, Römerpastete, Wiener-Würstchen udgl.) besitzt z. B. eine Zusammensetzung aus ca. 11 % ± 3 % Eiweißstoffen, ca. 7 % ± 2 % Fettstoffen und ca. 3 % ± 1 % Kohlenhydrate sowie einen Brennwert von ca. 120 kcal ± 15 %.

Die spezifischen Eigenschaften der neuen MM-Technologie zur Milch- und Fleischverarbeitung und der damit hergestellten Produkte bieten eine Fülle von Vorteilen auf den verschiedensten Gebieten des Gesundheitswesens und der Markwirtschaft.

Im folgenden wird eine Zusammenstellung vorteilhafter Eigenschaften der MM-Produkte gegeben.

Ernährungsphysiologische Vorteile

— Hoher Grad an Naturbelassenheit durch wertschonende Technologie bei der Herstellung der MM-Produkte

— Hohes, ausgewogenes Potential an essentiellen Nährstoffen aufgrund einer vielseitigen Suzammensetzung an Proteinen, Fetten, Kohlenhydraten, Vitaminen, Mineralstoffen und Spurenstoffen in den zwei Hauptbestandteilen Fleisch und Milch

— Guter Geschmack ohne Zumischung von Schweinefett, Rindertalg oder dergleichen

— Gute Konsistenz ohne Verwendung von Bindemitteln und hohen Fettanteilen

— Gute Haltbarkeit und zum Teil verbesserte Haltbarkeit ohne besondere Zusätze wie Konservierungsstoffe udgl.

— Fett- und kalorienarm

— Deutlich geringere Kochsalz- und Natriumzufuhr

— Reichliche Zufuhr an Eisen und Kalzium

— Eigenschaften eines Grunddiät-Produktes

— Positive Zusammensetzung zur Regulierung der Stoffwechsel- und Kreislaufgrundfunktionen und dadurch besonders geeignet als Diätkost für Langzeiternährungs-Therapien

— Verwendung als standardisierte und preiswerte Krankenkost

— Verwendung als allgemeine Diätkost für Kinderhorte, Altersheime, Sanatorien udgl.

— Vielseitige Verwendung als Truppenverpflegung und für staatliche Lagerungsmaßnahmen udgl.

— Aufwertung der Milch als das Volksnahrungsmittel sowie Steigerung der Akzeptanz

— Wesentlich erhöhte Verwertungsmöglichkeiten und Verträglichkeit der Milch in Entwicklungsländern als aufgewertetes jedoch billigeres Milch-/Fleisch-Produkt

Volks- und privatwirtschaftliche Vorteile

— Durch erhöhten Verbrauch an Milchprodukten wesentliche Einsparungen an Subventionen sowie Abbau von Einlagerungen

— Geringere Verarbeitung von Milch zu Milchpulver, dadurch Einsparung von Energiekosten, Lagerungskosten und dergleichen

— Magermilch kann zu einem höherwertigen Mischprodukt mit Fleisch und insbesondere Überschuß-Rindfleisch verarbeitet werden

— Zusätzliche Sicherung landwirtschaftlicher Existenzen durch erhöhten Verbauch an Milch und Milcherzeugnissen

— Wirtschaftliche sinnvolle Verwendung von Milch zur Herstellung von Nahrungsmitteln anstelle von Tierfutter

— Preiswertes Produkt aufgrund der in großen Mengen vorhandenen Ausgangsstoffe und der einfachen Technologie

— Anreiz für neue Unternehmen (handwerkliche oder industrielle Hersteller) jeder Größenordnung, da zusätzliche Verdienstmöglichkeiten

— Großes Verbrauchsvolumen schon allein für öffentliche Institutionen, Krankenhäuser, Kindergärten, Schulen, Betriebs- und Truppenkantinen usw.

— Bei gewissen Abnahmegarantien durch öffentliche Institutionen und Konsumenten werden zusätzliche Erträge bei den Herstellern gesichert, wodurch Beschäftigungsprogramme und Arbeitsplätze sichergestellt und geschaffen werden können
— Preisgünstiges Exportprodukt, z. B. für Entwicklungsländer
— Zusätzliche Absatzmöglichkeiten für einschlägige Maschinen- und Gerätehersteller
— Mittel- und langfristig durch die Anwendung von MM-Produkten als Schonkost und Diätkost wesentliche Einsparungsmöglichkeiten im Gesundheitswesen

Verfahrenstechnische Vorteile

— Verhältnismäßig einfache Herstellungstechnologie
— Herkömmliche maschinelle Ausrüstungen können weiterverwendet werden
— Keine besonderen Anforderungen an das Herstellungspersonal
— Milch und Milchderivate als Ausgangsprodukte sowie die sonstigen Zutaten sind in ausreichender Menge, größtenteils im Überfluß vorhanden
— Die MM-Produkt-Vollkonserven sind in einfacher Weise herzustellen
— Die MM-Produkt-Grundmasse kann mit Hilfe üblicher Verfahren in Trockenform gebracht werden

Die nach dem MM-Verfahren herstellbaren Milch-Fleischprodukte lassen sich in üblichen Wurstsorten einordnen.

1. Feine Brühwurst (Brühwurst, Fleischwurst, Gelbwurst, Lyoner, Bolognawurst, Münchner Weißwurst, Rosties)
2. Grobe Brühwurst (Bierwurst, Jagdwurst, Lyoner Schinkenwurst, Bauernfrühstück, Heidefrühstück, Römerwurst, Römerpastete)
3. Brühwurst als Halbdauerware (Rauchlyoner, Tiroler, Krakauer, Kochsalami)
4. Brühwurst mit groben Fleischeinlagen (Bierschinken, Mortadella, Schinkenwurst)
5. Wurst und Würstchen (Bockwurst, Knackwurst, Frankfurter Würstchen, Wiener Würstchen, Würstchen jeder Art)
6. Leberpasteten und ähnliche Erzeugnisse (Kalbsleberpastete, Schinkenpastete, Leber-Loaf, Wildpastete, Leberterrinen, Lebercreme, Geflügelleberpastete, Fischpastete, Crustazeenpastete, Meeresfrüchtepastete, Meerestierprodukte)
7. Kochwürste (feine Leberwurst, grobe Leberwurst, Kräuterleberwurst, Braunschweiger Leberwurst)
8. Fleischkäseprodukte (Fleischkäse, weißer Fleischkäse (gegebenenfalls mit Einlagen wie z. B. Pilze etc.), Leberkäs, Frühstücksfleisch, Luncheonmeat)
9. Mettwurstartige und salamiartige Produkte

Mit Hilfe der MM-Technologie lassen sich die verschiedensten Fisch- und Meerestierprodukte herstellen, wobei Frischfische, gekochte, gebratene und geräucherte Seefische und Süßwasserfische verwendet werden können. In dieser Weise lassen sich die verschiedenartigsten Fischpasten und -pasteten, Fischwürste, Krabben-, Garneelen-, Krebs- und Hummerprodukte herstellen. Aufgrund der Verwendung der MM-Technologie lassen sich wesentlich cholesterinreduzierte Crustazeenprodukte herstellen, die eine den in der Natur vorkommenden Tieren sehr ähnliche Textur und Konsistenz besitzen. Durch Einbau von tiefgekühlten Protein und kohlenhydrathaltigen Rohstoffen lassen sich auch hier wie bei allen MM-Produkten strukturierte und/oder faserhaltige Produkte erzeugen.

Um Konsistenz, Textur, Aussehen und Geschmack je nach hergestelltem Produkt zu beeinflussen, wird mit unterschiedlichen Teilchengrößen, verschiedenen Kuttergeschwindigkeiten sowie vor allem in bestimmten Temperaturbereichen und vorzugsweise bei niedrigen Temperaturen, stark gekühlten oder gefrorenen Zustand der Zutaten gearbeitet.

Die nach der MM-Technologie hergestellten Milchzubereitungen lassen sich insbesondere in der Diätetik verwenden. In diätetischer Hinsicht sind die MM-Produkte (abgesehen von den für Entwicklungsländer vorgesehenen « Kraftprodukten ») als kalorienarm, fettarm, vitamin- und mineralstoffangereichert, natriumreduziert und nährstoffverbessert anzusehen.

Die Grunddiät-Modifikationen der MM-Produkte können grundsätzlich als allgemeine Schonkostprodukte verwendet werden, die in vorteilhafter Weise bei Übergewicht und insbesondere bei Adipositas eingesetzt werden können, also bei über dem Normalgewicht liegenden Körpergewichten in Folge von erhöhten Anteilen an Körperfett.

MM-Produkte wurden für folgende Grunddiät-Modifikationen entwickelt und können mittels der MM-Technologie adaptiert werden :

1. Grunddiätmodifikation bei Übergewicht, Adipositas und Fettleber von Erwachsenen (kalorienarme Grunddiät-Variante/allg. Reduktionskost)
2. Grunddiätmodifikation bei Übergewicht und Adipositas für Kinder und Jugendliche (kalorienarme, modifizierte Grunddiät-Variante)
3. Grunddiätmodifikation bei Hypertonie (natriumarme, kalorienarme Grunddiät-Variante)
4. Grunddiätmodifikation bei Atherosklerose für Senioren (Herzinfarktrisiko, Koronarsklerose, Herzinfarktrehabilitation, Zerebralsklerose und periphere atherosklerotische Gefäßkrankheiten) (kalorienarme, modifizierte Grunddiät-Variante/Seniorenkost)

5. Grunddiätmodifikation bei manifestem Diabetes (Kohlenhydratdefinierte, kalorienarme Grunddiät-Variante)

6. Grunddiätmodifikation bei Hypercholesterinämie/Hyperbeta-Lipoproteinämie (fettmodifizierte, kalorienarme Grunddiät-Variante)

7. Grunddiätmodifikation bei primärer Hyperurikämie und Gicht (Purinarme, kalorienarme Grunddiät-Variante)

8. Grunddiätmodifikation bei Ballaststoffmangel-Obstipation (Ballaststoffangereicherte, kalorienarme Grunddiät-Variante)

An spezielle diätetische Erfordernisse angepaßte sowie im Nährwert optimal eingestellte MM-Produktvarianten bieten sich insbesondere an bei Unterernährung, Störungen der Nahrungsaufnahme, Vitamin- und Mineralstoffmangel, Rekonvaleszenz, als Seniorenkost, als Kinderkost sowie für den Hochleistungssport.

In diesem Zusammenhang ist insbesondere darauf hinzuweisen, daß nach bisherigen Untersuchungen bestimmte, beim Verzehr von Milch und Milchprodukten auftretende, Intoleranzen aufgrund der gemeinsamen Verarbeitung mit Fleisch wesentlich reduziert oder vollständig beseitigt werden.

Bei der technologischen Herstellung der MM-Produkte, die auf der Verwendung von Milch und Milchprodukten als Hauptbestandteil beruht, können folgende Variationsmöglichkeiten bei den Zutaten in Anwendung kommen :

A) Allgemeine Milchzubereitungen

1) Mami (oder/und Vomi) + Bu/Öl
2) Mami (oder/und Vomi) + Bu/Öl + E
3) Mami (oder/und Vomi) + VMP + Bu/Öl (+ E)
4) Mami (oder/und Vomi) + MMP + Bu/Öl (+ E)
5) MMP-(oder/und VMP-) Lösung + Bu/Öl (+ E)
6) $A_1$-$A_5$ + Käse
7) $A_1$-$A_5$ + Quark
8) $A_1$-$A_5$ + Yoghurt
9) $A_1$-$A_5$ + Buttermilch
10) $A_1$-$A_5$ + Molke
11) $A_1$-$A_5$ + Honig
12) $A_1$-$A_5$ + Kakao
13) $A_1$-$A_5$ + Kaffee
14) $A_1$-$A_5$ + Marzipan
15) $A_1$-$A_5$ + Früchte- bzw. Obsteinlagen
16) $A_1$-$A_5$ + Gemüseeinlagen
17) $A_1$-$A_5$ + Cerealeinlagen
18) $A_1$-$A_5$ + Nußeinlagen

B) Milchzubereitungen mit Fleischzusatz

19) Mami + F
20) Mami + MMP + F
21) Mami + VMP + F
22) Vomi + F
23) Vomi + MMP + F
24) Vomi + VMP + F
25) MMP-Lösung + F
26) VMP-Lösung + F
27) MMP-Lösung + VMP-Lösung + F
28) Mami + Bu + F
29) Vomi + Bu + F
30) MMP-Lösung + Bu + F
31) VMP-Lösung + Bu + F
32) MMP-Lösung + VMP-Lösung + Bu + F
33) Mami + MMP + Bu + F
34) Mami + VMP + Bu + F
35) Vomi + MMP + Bu + F
36) Vomi + VMP + Bu + F
37) Mami + E + F
38) Mami + MMP + E + F

39) Mami + VMP + E + F
40) Vomi + E + F
41) Vomi + MMP + E + F
42) Vomi + VMP + E + F
43) MMP-Lösung + E + F
44) VMP-Lösung + E + F
45) MMP-Lösung + VMP-Lösung + E + F
46) Mami + Bu + E + F
47) MMP-Lösung + Bu + E + F
48) Mami + MMP + Bu + E + F
49) GF + Mami + E + F
50) GF + MMP-Lösung + Bu + Öl + F

C) Milchzubereitungen mit sonstigen Zusätzen

51) $A_1$-$A_{18}$ mit Fisch jeder Art
52) $A_1$-$A_{18}$ mit Crustazeen
53) $A_1$-$A_{18}$ mit Meerestiere jeder Art
54) $B_{19}$-$B_{50}$ mit besonderen Fleischzusätzen (Wild, Geflügel, Eier udgl.)
55) $B_{19}$-$B_{50}$ mit Pilz- und Gemüseeinlagen
56) $B_{19}$-$B_{50}$ mit Fischzusatz
57) $B_{19}$-$B_{50}$ mit Käse- und Milchprodukteinlagen
58) $B_{19}$-$B_{50}$ mit Soja- oder Sojaprodukteinlagen
59) $B_{19}$-$B_{50}$ mit Kartoffeleinlagen
60) $B_{19}$-$B_{50}$ mit Crustazeen
61) $B_{19}$-$B_{50}$ mit Meerestieren jeder Art

Erklärungen der Abkürzungen :

Mami = Magermilch (<0,5 % Fett bis 1,5 % Fett)
Vomi = Vollmilch (1,5 % Fett bis über 3,5 % Fett)
MMP = Magermilchpulver
VMP = Vollmilchpulver
Bu = Butter oder tierische Fette oder Öl jeder Art
Öl = pflanzliche und/oder tierische Öle jeder Art
E = Emulsion (bestehend aus Wasser, Milchpulver sowie Butter und/oder Öl (wie oben unter Bu und Öl definiert) in geeigneten und erforderlichen Zusammensetzungen)
F = Fleisch (Rinds-, Kalbs-, Schweinefleisch und Fleisch jeder Art und Fleischmischungen, Teilprodukte dieser Fleischsorten, Fleischextrakte, Schwarten, Schwartenemulsionen, Fleischbrühe, diverse Kollagenmaterialien wie Gelatine, und dergleichen)
GF = Gefrierfleisch und Gefrierfleischprodukte jeder Art

In den folgenden Beispielen werden bevorzugte Ausführungsformen des Verfahrens und der Produkte nach der Erfindung sowie die besonderen Verwendungen, Anwendungen und neuartigen Verwendungen und Vorrichtungen im einzelnen erläutert.

Beispiel 1

Milchzubereitung in Art von Fleischkäs

7,5 kg Magermilch (oder Vollmilch) oder ein Gemisch von Magermilch und Vollmilch, (gegebenenfalls unter Zusatz von Molke) oder 5 kg Trinkwasser und 2,5 kg Magermilchpulver oder 7,5 kg Magermilch (oder Vollmilch), die mit 100 bis 2 000 g Magermilchpulver (oder Vollmilchpulver) versetzt worden sind, werden bei Temperaturen von ca. 10 bis 70 °C in einem Kutter oder in einer anderen gründlich homogenisierenden Mischvorrichtung miteinander vermischt.

Nach der Bildung einer homogenen Mischung werden 300 g Butter oder 300 g Öl oder 600 g einer Mischung aus Butter und Öl in beliebigen Mischungsverhältnissen im Kutter zugesetzt. Diese Masse wird so lange bei Temperaturen zwischen etwa 20 bis 40 °C gemischt, bis eine homogene Emulsion entstanden ist.

Es können nach Belieben andere Anteilsverhältnisse der Komponenten Magermilch, teilentrahmte oder teilentfettete Milch, Vollmilch, Magermilchpulver, Vollmilchpulver, Sonnenblumenöl, Butter, Lebertran oder anderer pflanzlicher und tierischer Öle und Fette oder aus Naturstoffe hergestellte Fettersatzstoffe, Ballaststoffe sowie Trinkwasser zueinander gewählt werden.

Die so hergestellte Emulsion wird auf Temperaturen unter etwa — 4 °C bis etwa — 15 °C gekühlt bis die Masse vollstandig durchgefroren ist.

11

Die so gefrorene Emulsionsmasse wird im Kutter zu gröberen oder feineren Bestandteilen je nach Weiterverarbeitung zerkleinert. Zu diesem Emulsions-Eis-Gemisch kann für die weitere Verarbeitung auch gegebenenfalls zum Zwecke der Verdünnung auch eine lediglich stark gekühlte Emulsion zugegeben werden, falls mehr pastöse Produkte erwünscht sind.

In das gefrorene Emulsionsgemisch wird im Kutter ein Fleisch-Grundbrät eingemischt, das beispielsweise a) aus 12 kg fein zerkleinertem Rindfleisch, 3 kg Mager- oder Vollmilcheis und 400 g Nitritpökelsalz oder b) 9 kg fein zerkleinertem Rindfleisch, 3 kg Magermilcheis (oder Vollmilcheis oder einer Mischung davon) und 400 g Nitritpökelsalz (NPS) hergestellt worden ist.

Als Kutter werden die üblicherweise für Fleisch- und Wurstprodukte benutzten Kutter verwendet. Bei der Verwendung von Vakuumkutter und Gefrierkuttern entstehen entsprechend modifizierte Produkte. Durch die Art der Messer und durch die Laufgeschwindigkeit des Kutters kann die Konsistenz des MM-Produktes und die Beschaffenheit insgesamt eingestellt werden. Die Verwendung eines Vakuumkutters hat sich als besonders vorteilhaft herausgestellt.

Wesentlich ist, daß in jeder Phase des Herstellungsvorganges die einzelnen Gemische bzw. Massen gründlich homogenisiert werden, bis die erforderliche Bindigkeit und Kosistenz geschaffen worden ist.

Zu der in oben angegebener Art und Weise hergestellten Masse werden dann in üblicher Weise Gewürze und weitere Zutaten wie Kräuter oder im Falle von Römerwurst oder Römerpastete grobe Fleischstücke beispielsweise bestehend aus gepökeltem Schweinefleisch oder Schinken eingearbeitet.

Die Gesamtmasse wird dann in üblicher Weise in Därme, Konservenbüchsen oder sonstige Behältnisse abgefüllt und bei Temperaturen von ca. 75 °C gebrüht (und gegebenenfalls geräuchert) oder bei 110 °C bis etwa 114 °C je nach Herstellungsverfahren und Zutaten zu Konservenprodukten verarbeitet.

Anstelle des Nitritpökelsalzes kann auch normales Kochsalz verwendet werden oder Gemische von z. B. 1/3 Nitritpökelsalz und 2/3 Kaliumsalz oder Diätsalz. Hell gefärbte Fleischpasteten oder Fleischwürste können ohne Zusatz von NPS oder Nitrit oder Salpeter hergestellt werden.

Bei der Verwendung von Fertiggewürzen ist es vorteilhaft jeweils etwa 3 g pro kg Gesamtmasse zu verwenden. Gegebenenfalls kann auch 1 g Glutamat pro kg des Produktes und bei roter Pastete zusätzlich 1 g Ascorbinsäure pro kg des MM-Produktes zugesetzt werden.

## Beispiel 2

Herstellung von MM-Produkten in Art von Grill- und Bratprodukten

4 kg Magermilch und 1,666 g Magermilchpulver werden bei einer Temperatur von 20 °C im Kutter fein homogenisiert. Nach Zusatz von 50 bis 300 g Butter und/oder Sonnenblumenöl oder ähnlichem Öl wird diese Emulsion auf eine Temperatur unter minus 4 °C gekühlte Emulsion im Kutter homogenisiert.

Die so hergestellte dickflüssige stark unterkühlte Emulsion oder Emulsion in Art eines Eisschnee wird mit einem Fleischgrundbrät versetzt.

Dieses Fleisch-Grundbrät wird aus 10 kg Rindfleisch, 6 kg gefrorener Magermilch (oder gefrorener Vollmilch oder einer anderen Milchemulsion) und 300 g Kochsalz hergestellt.

Die so entstandene Gesamtmasse wird bei einer Temperatur von 0-14 °C im Kutter homogenisiert. Dieser gesamten homogenisierten Masse werden Gewürze zugesetzt und zwar 3 g Gewürz pro kg Masse, 1 g Glutamat pro kg Masse und je nach Wurstart 1 g Majoran pro kg.

## Beispiel 3

MM-Produkte in Art von Frühstückspasteten (mit hohem Fleischanteil)

10 kg Milchemulsion werden gefroren und dann im Kutter fein zerkleinert und mit 25 kg gekühltem magerem Rindfleisch und 25 kg magerem Schweinefleisch gründlich vermischt.

Die Weiterverarbeitung erfolgt in üblicher Weise.

Die Emulsion wird beispielsweise hergestellt aus 5 kg Milch oder Milch-Trinkwasser-Mischungen sowie 2,5 kg Magermilchpulver oder Vollmilchpulver und 0,5 kg Sonnenblumenöl oder Butter oder Lebertran. Anstelle der Milch kann auch Molke oder ein anderes geeignetes Milchprodukt, Milchprodukt-Filtrate oder Konzentrate verwendet werden.

Das Schweinefleisch kann teilweise durch Pilzzugabe, Gemüsezugabe oder Cerealienzugabe ersetzt werden.

In diese Mischung können vor der Abfüllung auch 10 bis 35 kg grobes gegebenenfalls geräuchertes Schweinefleisch eingearbeitet werden und Cevapcici-Gewürz und gegebenenfalls Majoran (sowie Glutamat und Ascorbinsäure) verarbeitet werden.

## Beispiel 4

MM-Produkte in Art von Milchmixerzeugnissen

10 kg Milchemulsionseis, die wie im Beispiel 3 hergestellt werden und mit 10 bis 50 kg grober oder feiner Gemüsseinlage verschiedenster Art oder Obsteinlage in geeigneter Weise vermischt werden. Dazu können beispielsweise Spargel, Spinat, Brocolli, Rosenkohl, Pflaumen, Äpfel, Kirschen, Melonen, Ananas und dergleichen verwendet werden.

### Beispiel 5

MM-Produkte in Art einer Fischpastete oder eines Crustazeenprodukts

Zunächst wird eine Milchemulsion hergestellt, die aus 5 Anteilen Magermilch, 2,5 Anteilen Magermilchpulver und 0,5 Anteilen Sonnenblumenöl (oder Butter) besteht.

Die Emulgierung wird in vorteilhafter Weise in einem Kutter durchgeführt.

Die Emulsion wird dann gefroren. Die gefrorene Emulsion wird dann im Kutter zerkleinert. 3 kg der Emulsion werden mit 5 kg eines stark gekühlten oder gefrorenen Fischproduktes gründlich vermischt. Dieses Meerestierprodukt kann aus rohem, gekochtem oder geräuchertem Fisch, Fischfilet, Krabben-, Garnelen-, Krebs- und Hummerfleisch produkten (Extrakten) bestehen. Die so hergestellte MM-Pastete kann in üblicher Weise mit entsprechenden Kräutern und Gewürzen versetzt werden.

Zu der obrigen aus Emulsion und Fischprodukt bestehenden Pastetenmasse kann ein stark gekühltes oder gefrorenes Fleisch-Grundbrät zugesetzt werden, das aus 10 kg magerem Rindfleisch (oder auch Schweinefleisch) 300 NPS und 3 kg gefrorener Magermilch im Kutter hergestellt worden ist.

Dieses Produkt wird in üblicher Weise zu dem MM-Produkt weiterverarbeitet.

### Beispiel 6

MM-Produkt in Art einer Fischwurst

4 kg Vollmilch werden gefroren, zerkleinert und mit 10 kg Seefischfilet sowie Kochsalz und Gewürzen im Kutter gründlich vermischt.

Das Seefischfilet muß am besten vor der Verwendung 24 Stunden gewässert werden.

In dieses Fischfleischbrät werden 2-4 kg gefrorene Emulsion, hergestellt aus 5,0 kg Molke, 2,5 kg Magermilchpulver und 0,500 kg Sonnenblumenöl (oder Butter) zugegeben.

### Beispiel 7

MM-Produkt in Art einer Römerpastete

4 kg einer Emulsion, die aus 5 Anteilen Magermilch, 2,5 Anteilen Magermilchpulver und 0,5 Anteilen Sonnenblumenöl hergestellt und gefroren wurde, wird im Kutter mit einem Fleisch-Milch-Brät gründlich vermischt, das aus 10 kg magerem Rindfleisch, 6 kg gefrorener Magermilch und 400 g Nitritpökelsalz besteht.

Die gründlich vermischte Masse wird dann im Kutter mit 4 kg gekühltem Schweinefleisch versetzt.

Die so hergestellt Masse wird in üblicher Weise weiterverarbeitet.

Mit Hilfe von Magermilchpulverzusatz oder Änderung der Art und Menge des Lipidzusatzes kann die Konsistenz des Endproduktes eingestellt werden.

### Beispiel 8

MM-Produkt in Art einer Fleischpastete

Als Emulsion kann z. B. eine homogene gefrorene Mischung aus 2,5 kg Magermilch, 2,3 kg Magermilchpulver und 0,3 kg Sonnenblumenöl verwendet werden.

5 kg gekühltes (oder gefrorenes) und fein zerkleinertes Rindfleisch werden sukzessive mit 5 kg gefrorener Emulsion im Kutter oder in einer anderen geeigneten Vorrichtung vermischt. Zu der homogenen Masse werden die erforderlichen Gewürze und Salze zugegeben.

Das Produkt wird in üblicher Weise weiterverarbeitet.

### Beispiel 9

MM-Produkt in Art einer feinen Wiener Fleischwurst, Bologna, Extrawurst, Wiener Extra-Stangenwurst

2,8 kg der Emulsion bestehend aus 11 Anteilen Magermilch, 2,5 Anteilen Magermilchpulver und 0,15 Anteilen Butter oder Öl werden auf — 10 °C bis — 20 °C gefroren und im Kutter mehr oder weniger fein zerkleinert. Dazu werden 8,2 kg Fleischbrät, bestehend aus 5 kg Rindfleisch, 3,0 kg Magermilch (0,5 bis 1,5 % Fett) und 200 g Nitritpökelsalz zugesetzt.

Nach vollständiger Homogenisierung im Kutter bei Temperaturen bis maximal 12 bis 14 °C wurden Gewürze, Glutamat, Ascorbinsäure und Knoblauch in üblicher Menge dazugegeben.

Die Abfüllung erfolgte in Sterildarm, Naturdarm, Dosen, Gläser oder Terrinen. Der Garung wurde bei Temperaturen von 75 bis 105 °C im heißen Ofen durchgeführt. Gegebenenfalls kann ein Gelatineüberguß mit eingearbeitet werden oder die Umhüllung aus Pastetenteig bestehen.

Beispiel 10

MM-Produkt in Art eines Brotaufstriches

2 kg Magermilch, 1 kg Magermilchpulver und 400 g Sonnenblumenöl, Butter oder Lebertran oder ein anderes Fett werden im Kutter homogenisiert und gefroren.

3,4 kg dieser Emulsion werden zusammen mit 1 kg bis 2 kg Trockenfruchtpulver (oder 1 kg Trockenfischpulver oder einer anderen Fischzubereitung) im Kutter bei Temperaturen von 4 bis 12 °C und vorzugsweise bei 10 °C homogenisiert.

Die Weiterverarbeitung erfolgt in üblicher Weise.

Beispiel 11

MM-Produkt nach Art einer Kräuterpastete

Bei der hier verwendeten Emulsion werden 10 Anteile Molke oder Magermilch mit 5 Anteilen Magermilchpulver und 1,0 Anteile Sonnenblumenöl und/oder Butter vermischt und gefroren.

12 kg der so hergestellten und gefrorenen Emulsion wurden im Kutter bei Temperaturen unter — 10 °C feinstzerkleinert.

Anschließend wurde ein auf etwa 10 °C gekühltes Fleischbrat bestehend aus 11 kg Rindfleisch, 3 kg Magermilch und 200 g Nitritpökelsalz im Kutter eingearbeitet und die Gesamtmasse homogenisiert in einem Temperaturbereich von etwa 8 bis max. 14 °C.

Als Würzung wurden 75 g Fertiggewürz, 40 g Glutamat und 40 g Ascorbinsäure verwendet.

Die Abfüllung im Sterildarm oder offenen Behältnissen und die Garung und Sterilisation geschieht unter üblichen Bedingungen.

4,5 kg der gefrorenen Emulsion können auch im Kutter feinzerkleinert werden und mit einem Fleisch-Grundbrät versetzt werden, das aus 10 kg Rindfleisch, 6 kg fettarmer Magermilch und 400 g NPS besteht. Die weitere Verarbeitung wie oben unter Zugabe eines Kräuterpastetengewürzes.

Beispiel 12

MM-Produkt in Art eines Kinder-Brotaufstriches

Aus 1,9 kg Magermilch, 0,5 kg Magermilchpulver, 2 kg Butter und 100 g Sonnenblumenöl (oder auch Lebertran) wird eine Emulsion hergestellt und gefroren.

4,5 kg dieser gefrorenen Emulsion wird im Kutter fein zerkleinert und mit 500 g Soja, Vollsoja oder Nußmehl, oder Trockenfluchtpulver gemischt mit ganzen Äpfel- oder Birnenstücken vermischt und zu einer feinen Masse verarbeitet und homogenisiert.

Weiterverarbeitung in üblicher Weise.

Beispiel 13

MM-Produkt in Art eines Brotaufstriches mit Kakao

Aus 3,5 kg Buttermilch, 1 kg Magermilch, 1,5 kg Magermilchpulver, 1,5 kg Butter und 100 g Sonnenblumenöl oder vitaminisiertem Weizenkeimöl wird eine Emulsion hergestellt und gefroren. 6,5 kg dieser Emulsion werden im Kutter zerkleinert und mit 200 g Zucker sowie 300 g Kakaopulver versetzt, homogenisiert und zu einer einheitlichen Masse verarbeitet.

Die Konsistenz kann wie beschrieben eingestellt werden.

Beispiel 14

MM-Produkt in Art eines Halbfett- oder Viertelfett-Kinderaufstriches.

3,8 kg Magermilch, 1 kg Magermilchpulver sowie 200 g Sonnenblumenöl werden im Kutter homogenisiert und gefroren.

2 kg dieser Emulsion werden bei Temperaturen zwischen 4 bis 14 °C unter Zugabe von 0,5 kg Magermilchpulver versteift und homogenisiert und dann mit 1 500 g Butter oder 1 500 g Margarine oder einer Mischung aus 750 g Butter und 750 g Margarine versetzt und gründlich homogenisiert. Der Anteil der Fettkomponente kann auch halbiert werden.

Die Masse wird in Becher, Dosen oder dergleichen abgepackt und in üblicher Weise weiterverwertet.

Beispiel 15

MM-Produkt in Art einer Lebercreme

Bei diesem Beispiel wurde eine Emulsion verwendet, die hergestellt wurde aus 5 kg Magermilch oder Molke, 2,5 kg Magermilchpulver und 360 kg Sonnenblumenöl und/oder Butter.

4 kg dieser Emulsion wurden auf — 4 °C gekühlt bzw. gefroren und mit 1 kg Leber im Kutter feinstzerkleinert zusammen mit 200 g Zwiebeln und 100 g Natriumchlorid oder NPS. Die ganze Masse wurde gründlich homogenisiert und in üblicher Weise gewürzt, abgefüllt und gegart weiterverarbeitet.

Beispiel 16

MM-Produkte in Art einer Frühstückspastete oder Luncheon-Pastete

Bei der Herstellung dieser Frühstückspastete werden zunächst 7 kg Emulsion aus 5 kg Vollmilch, 2 kg Magermilchpulver und 50 g Butter oder Sonnenblumenöl hergestellt und gefroren.

Die gefrorene Emulsionsmasse wird mittelgrob zerkleinert und mit 5 kg Magermilch und 5 kg magerem Rindfleisch im Kutter fein vermischt und homogenisiert.

Anstelle der 5 kg Rindfleisch können auch 2,5 kg mageres Rindfleisch und 2,5 kg Schweinefleisch verarbeitet werden. Ebenfalls kann anstelle des Rindfleisches oder Rindfleisches und Schweinefleisches, Wildfleisch, Geflügelfleisch und dergleichen verwendet werden.

Die weitere Verarbeitung geschieht in üblicher Weise.

Beispiel 17

MM-Produkt in Art eines Schweizer Fleischkäs

Aus 5 kg Magermilch, 2,5 kg Magermilchpulver und 360 g Sonnenblumenöl wird im Kutter eine Emulsion hergestellt und gefroren.

Aus 5 kg magerem Rindfleisch, 1,5 kg Magermilch und 100 g NPS oder Natriumchlorid wird im Kutter ein Fleisch-Grundbrät hergestellt und stark gekühlt oder gefroren.

Dieses Fleisch-Grundbrät und die gefrorene Emulsion werden im Kutter vermischt und die homogene Masse in üblicher Weise mit 40 g Gewürze, 20 g Glutamat und 20 g Ascorbinsäure versetzt.

Abfüllung und Weiterverwendung werden in üblicher Weise durchgeführt.

Beispiel 18

MM-Produkt in Art einer Lemon- oder Orangecreme

Aus 5 kg Milch, Buttermilch oder Molke, 1,25 kg Magermilchpulver, 500 g Caseinat und 750 g Butter wird eine einheitliche Emulsion hergestellt und gefroren.

1 kg dieser Emulsion wird im Kutter bei Temperaturen von 8 bis 18 °C mit 30 bis 60 g Zitronen- oder Orangensaft und 30 bis 60 g Zucker verarbeitet zu einer einheitlichen Masse, die üblicherweise weiterverwendet wird. Anstelle der Sacharose kann auch Fruchtzucker verwendet werden.

Ballaststoffe können in üblicher Weise eingemischt werden.

Beispiel 19

MM-Produkt in Art eines Joghurtproduktes

Eine Emulsion wird hergestellt aus 10 kg Milch, 2,5 kg Magermilchpulver und 1,5 kg Butter und gefroren.

10 kg dieser Emulsion werden mit 1 bis 2 kg Frischjoghurt im Kutter bei Temperaturen zwischen 25 bis 45 °C vermischt und üblicherweise weiterverarbeitet.

Gegebenenfalls kann eine Starterkultur eines beliebigen Keimes (Lacto bacillus bulgaricus) der Emulsion schonend zugesetzt werden. Die Abfüllung erfolgt in Gläsern oder Bechern. Die Gärung kann bei 40 bis 45 °C erfolgen und die Lagerung bei 4 bis 8 °C.

Beispiel 20

MM-Produkt in Art eines Zitronen-Joghurt

Eine Emulsion wird hergestellt aus 10 kg Milch, 5 kg Magermilchpulver und 0,5 kg Butter. Diese Emulsion wird gefroren.

Die oben hergestellte Emulsion wird nach Zusatz der Starterkultur und nach Reifung im Großgefäß

15

nach Abschluß der Reifung mit 2 bis 5 % Zitronensaft und 5 bis 10 % Zucker (Fruchtzucker versetzt und gut vermischt. Unter Umständen kann dieser Mischung zur weiteren Festigung Gelatine, Pectine oder ähnliches zugesetzt werden.

Die Weiterverarbeitung erfolgt in üblicher Weise.

Anstelle der Emulsion kann erfindungsgemäß Milcheis verwendet werden.

## Beispiel 21

MM-Produkt in Art eines Obstpuddings

Eine Emulsion wird hergestellt aus 2 kg Magermilch, 1 kg Magermilchpulver sowie 400 g Sonnenblumenöl und/oder Butter und/oder Lebertran und/oder einem anderen geeigneten Fett. Die homogenisierte Mischung wird gefroren.

3 kg der oben hergestellten Emulsion werden im Kutter fein zerkleinert und zusammen mit 1 bis 2 % Zitronensaft (oder Zitronensäure oder anderen Obstextrakten, Obstkonzentraten und/oder Obstaromen), 2 bis 3 % Zucker sowie 2 bis 5 % Gewürzen vermischt und homogenisiert.

Diese Masse wird dann im Kutter bzw. Kochkutter bei Temperaturen von 90 bis 105 °C homogenisiert und anschließend in üblicher Weise abgefüllt und weiterverarbeitet.

Gegebenenfalls können in die Masse fein zermahlene Obstprodukte, Obstteile oder auch ganze Obstteilchen hineingegeben werden.

## Beispiel 22

MM-Produkt in Art einer « Kraftpastete »

Hierbei wurde eine Emulsion verarbeitet, bestehend aus 10 Anteilen Magermilch, $H_2O$ oder Molke, 5 Anteilen Magermilchpulver und 2 Anteilen Sonnenblumenöl oder Butter oder einem ernährungsphysiologisch geeigneten Gemisch aus pflanzlichen und/oder tierischen Fetten.

4 kg dieser Emulsion wurden gefroren (bis — 10 bis — 40 °C) und im Kutter feinzerkleinert. Dazu wurden 4,2 kg Fleischbrät zugesetzt bestehend aus 3 kg Rindfleisch, Putenfleisch, Hasenfleisch, Wildfleisch oder Mischungen davon, 1 kg Magermilch oder Vollmilch und 160 g Nitritpökelsalz oder -Natriumchlorid. Dieser homogenisierten Masse wurden nach Bedarf Gewürze, Glutamat, Ascorbinsäure und Fleischextrakt zugesetzt und diese in üblicher Weise weiterverarbeitet.

Zwecks Erhöhung des Protein- und Energiegehaltes können Sojaprodukte und/oder Fischprodukte oder weiteres Magermilchpulver, Vollmilchpulver, Proteinextrakte oder geeignete essentielle Aminosäuren, Lipide, Lipoide, Kohlenhydrate oder sonstige Wirkstoffe eingearbeitet werden.

In üblicher Weise können Ballaststoffe wie Weizenkleie oder dergleichen zugesetzt werden, aber auch Vitamine und/oder Mineral- und Spurenstoffe in wässriger oder organisch gebundener Phase in der Emulsion eingemischt werden.

## Beispiel 23

MM-Produkt in Art von Räucherfisch

Hierzu wird eine Emulsion verwendet, die aus 5 kg Magermilch oder Molke, 2,5 kg Magermilchpulver und 360 g Sonnenblumenöl und/oder Butter und 140 g Gewürzen und Salzen besteht. Die Emulsion kann teilweise durch bis zu 8 kg homogenisierte gefrorene Mager- und/oder Vollmilch ersetzt werden.

8 kg dieser Emulsion wurden gefroren und im Kutter feinstzerkleinert und zusammen mit 1,5 kg geräuchertem, gekühltem Fisch und 100 g Natriumchlorid homogenisiert. Der Fischanteil kann nach Belieben erhöht oder erniedrigt werden. Die Würzung wird nach Belieben durchgeführt und gegebenenfalls Ascorbinsäure und/oder Glutamat zugegeben. Die Abfüllung und Weiterverarbeitung geschieht entsprechend den üblichen Verfahren.

## Beispiel 24

MM-Produkt in Art einer Crustazeenpastete

Bei diesem Beispiel wird eine gefrorene Emulsion und gegebenenfalls Milcheis wie in Beispiel 23 beschrieben mit 1 kg Krabben-, Garneelen-, Krebs- oder Hummerfleisch oder Extrakten oder Teilen dieser oder anderer Meerestiere (z. B. Tintenfische, Octopoden oder dergleichen) verarbeitet. Falls erwünscht können in diese Mischung 500 g Rindfleisch oder 500 g Schweinefleisch oder 250 g Rindfleisch und 250 g Schweinefleisch eingearbeitet werden und zwar vorzugsweise in gefrorenem Zustand.

Beispiel 25

MM-Produkt in Art eines Hochleistungs-Produktes

Eine Emulsion wird hergestellt aus 20 Teilen Magermilch und/oder Vollmilch, 33 Teilen Magermilchpulver und/oder Vollmilchpulver, 2,5 Teilen Butter, 2,5 Teilen Sonnenblumenöl sowie 2,0 Teilen Lebertran. Diese Mischung wird gründlich homogenisiert und gefroren.

Ein Fleisch-Grundbrät wird hergestellt aus 10 Teilen Rindfleisch und/oder Fisch, 10 Teilen Schweinefleisch und/oder Wildfleisch, 10 Teilen Geflügelfleisch, 10 Teilen Magermilch sowie 200 g Kochsalz oder Nitritpökelsalz. Diese Masse wird gründlich homogenisiert und stark gekühlt oder gefroren.

60 Teile der fein zerkleinerten Emulsion sowie 40 Teile des fein zerkleinerten Bräts werden im Kutter gründlich vermischt und in üblicher Weise weiterverarbeitet. Beliebige Teile der Emulsion und/oder des Bräts können durch andere Lebensmittel wie Fisch, Cerealien, Frucht- oder Gemüsetrockenpulver etc. ersetzt werden.

Eine Würzung kann mit Sojaextrakt und/oder Suppen-Fleischextrakt durchgeführt werden. Bei einer Verwendung von Kochsalz kann zur Färbung Blutplasma und/oder rote Rübenextrakt und/oder ein ähnlicher natürlicher Farbstoff zugegeben werden.

Sowohl bei der Herstellung dieses MM-Produktes als auch bei den anderen Beispielen können selbstverständlich Vitamine, Mineralstoffe, Spurenstoffe und andere Wirkstoffe jeder Art zu einem geeigneten Zeitpunkt des Verfahrens zugegeben und eingearbeitet werden. Das Endprodukt kann in geeigneter üblicher Weise in ein Trockenprodukt bzw. Trockenpulver umgewandelt werden.

Beispiel 26

MM-Produkt in Art eines Gewürz-Käses

Eine Emulsion wird aus 11 Teilen Magermilch, 2,5 Teilen Magermilchpulver, 1 Teil Sonnenblumenöl und 0,5 Teilen Butter hergestellt. Diese Mischung wird im Kutter gründlich vermischt und gefroren.

16 Teile der oben hergestellten Emulsion wird fein zerkleinert und im Kochkutter bei Temperaturen von 4 bis 40 °C (je nach Art des herzustellenden Produkts) mit 2 kg Gruyere-Käse-Abschnitte und/oder 2 kg Emmentaler und/oder 2 kg eines weiteren Hart- oder Weichkäses sowie mit Gewürzen, Pfeffer, Salze, Knoblauch, Wein, Kirschwasser und dergleichen versetzt. Diese Mischung wird gründlich emulgiert und kann je nach Art des erwünschten Produktes auf verschiedene Temperaturen bis zu 100 °C erhitzt werden.

Beispiel 27

MM-Produkt in Art von Fleischklößchen oder Bratnockerl

Eine Emulsion wird hergestellt aus 5 kg Milch, 2 kg Magermilchpulver und 500 g Butter und/oder Sonnenblumenöl. Diese Masse wird im Kutter gründlich homogenisiert und gefroren.

4 kg der oben hergestellten gefrorenen Emulsion werden im Kutter fein zerkleinert und mit 10 kg magerem Rindfleisch, 6 kg Vollmilch, 500 g Magermilchpulver, 80 g Gewürzen, 40 g Glutamat und 200 g Natriumchlorid versetzt, gründlich vermischt und üblicherweise weiterverarbeitet.

**Patentansprüche**

1. Verfahren zur Herstellung von weitgehendst naturbelassenen, energie- und nährwerteinstellbaren Milch-Fleischprodukten auf der Basis von Milch, Milcherzeugnissen, Fleisch, Fleischerzeugnissen, gegebenenfalls unter Zusatz von Obsterzeugnissen, Getreideerzeugnissen und anderen Lebensmitteln, dadurch gekennzeichnet, daß die Milch-Fleischprodukte ohne Verwendung chemisch bearbeiteter oder chemisch hergestellter Ausgangsstoffe und ohne Zusatz von Bindemitteln, Emulgatoren und Dickungsmitteln hergestellt werden, indem eine Grundemulsions/Grundmischungs-Zutat auf der Basis von Milch oder einer Milchemulsion sowie Vollmilch- oder Magermilchpulver und gegebenenfalls eine Lipidkomponente in einem Kutter oder einer anderen gründlich emulgierenden und/oder homogenisierenden Vorrichtung bearbeitet, emulgiert und homogenisiert wird, die so erzeugte Grundemulsion gründlich gefroren und anschließend zerkleinert wird, eine oder mehrere dieser Grundemulsionen in einem Kutter oder einer anderen geeigneten Vorrichtung mit einer charakterisierenden Zutat auf Fleisch- und/oder Fisch- und gegebenenfalls Milch- und/oder Getreide- und/oder Gemüse und/oder Obst und sonstiger Nährmittelbasis und gegebenenfalls unter Zusatz von Salzen, Gewürzen und Geschmacksstoffen vermischt werden, und das in dieser Weise hergestellte Milch-Fleischprodukt in üblicher Weise zu Frischprodukten, Produkten mit begrenzter Haltbarkeit, Konserven, tiefgekühlten Produkten oder Trockenprodukten weiterverarbeitet wird.

2. Verfahren nach Anspruch 1, dadurch gekennzeichnet, daß jeweils die Grundemulsionszutat und die charakterisierende Zutat und bei Vermischung 98 % bis 2 % der Grundemulsions-Zutat und 2 % bis 98 % der charakterisierenden Zutat in einem je nach Zusammensetzung und Eigenschaften der Zutaten geeigneten Temperaturbereich von + 10° Celsius bis — 20° Celsius bearbeitet/verarbeitet werden.

3. Verfahren zur Herstellung eines Milch-Fleischproduktes nach Ansprüchen 1 und 2, dadurch gekennzeichnet, daß ein Kutter oder ein Vakuumkutter oder ein Kutter-Vakuumkutter mit Kühl- und Gefriervorrichtung als Hauptverarbeitungsvorrichtung verwendet wird.

4. Milch-Fleischprodukte hergestellt nach Ansprüchen 1 bis 3, dadurch gekennzeichnet, daß sich diese aus 2 % bis 50 % Proteinen, 2 %-25 % Lipiden, bestehend aus tierischen oder pflanzlichen Lipiden, 2 %-25 % Kohlenhydraten, bestehend aus Milch-, Pflanzen- oder sonstigen Kohlenhydraten und gegebenenfalls aus Restwasser zusammensetzen.

5. Milch-Fleischprodukte hergestellt nach Ansprüchen 1 bis 3, bestehend aus 8 %-18 % Proteinen, 2 %-9 % Lipiden sowie 2 %-9 % Kohlenhydraten und Restwasser.

6. Milch-Fleischprodukte mit einem Kaloriengehalt unter 100 Kcal/100 g Produkt, einem Fettgehalt von ca. 3,5 % und einem Cholesteringehalt von ca. 30-35 mg/100 g Produkt hergestellt nach Ansprüchen 1 bis 3 aus ca. 60 Anteilen gefrorener fettarmer Milch- und/oder Vollmilchzutat (unter 0,5 bis 3,5 % Fett) als Grundemulsion und ca. 40 Anteilen gefrorener charakterisierender Zutat, bestehend aus ca. 80 % sehr magerem (vorzugsweise frisch geschlachtetem) Rinds- oder Wildfleisch (ca. 2 %-4 % Fett) und ca. 20 % fettarmer Milch (ca. 0,5 bis 1,5 % Fett).

7. Verwendung einer, aus einer gründlich homogenisierten und anschließend gefrorenen, aus Milch, Milchpulver, Lipiden, gegebenenfalls weiteren Nährstoffen und Wasser bestehenden und in einem Kutter oder in einer anderen geeigneten die Struktur verändernden emulgierenden und homogenisierenden Vorrichtung hergestellten Milch-Grundemulsion, nach Ansprüchen 1 bis 3, für die Produktion von Milchprodukten, Wurstprodukten, Fischprodukten, Pasteten oder Lebensmitteln oder Futtermitteln jeder Art mit verbessertem Geschmack und Nährwert sowie mit verbesserter Konsistenz und Haltbarkeit als Ersatz für die sonst übliche und herkömmliche Verwendung von Mischungen aus Speck/Fett/Wasser oder Mischungen aus Speck/Fett/Wasser und aufgeschlossenem Milcheiweiß und sonstigen Emulgatoren, Bindemitteln, Dickungsmitteln und dergleichen.

8. Die Verwendung einer Grundemulsionszutat nach Ansprüchen 1 bis 3 in gefrorenem Zustand und in feinst zerkleinerter und/oder grobkörnig zerkleinerter Form und/oder in Form von strukturierten Teilchen für die Herstellung von Lebensmitteln und Futtermitteln jeder Art und vorzugsweise von energie- und nährwerteinstellbaren Nahrungsmitteln bestehend aus Milch-, Fleisch-, Fisch-, Meerestier-, Gemüse-, Obst oder anderen Nahrungsmittelbestandteilen.

## Claims

1. A process for preparing largely genuine calorie and nutritional value adjustable milk-meat products on the basis of milk, milk products, meat, meat products, if occasion arises with addition of fruit products, cereal products and other food products, which comprises that said milk-meat products are prepared without the use of chemically treated or chemically produced starting materials and without the addition of binding agents, emulgators and thickening agents, wherein a basic emulsion/basic mixture-ingredient on the basis of milk or a milk emulsion as well as milk and/or skimmed milk powder and if occasion arises with a lipid ingredient as treated, emulgated and homogenized, in a cutter or in other thoroughly emulgating and/or homogenisating means, the so produced basic emulsion is a thoroughly frozen and subsequently comminuted, one or severse of these basic emulsions are mixed in a cutter or in an other appropriate device with a characterising ingredient of the basis of meat- and/or fish and if occasion arises milk and/or cereal and/or vegetable and/or fruits and other nutrients food stuff and if occasion arises with the addition of salts, spices and flavours, and that the in this way produced milk-meat-product is processed/finished to fresh products, products with limited storage life, preserves, freezed products or dried products.

2. A process according to claim 1, wherein each of the basic emulsion ingredient and the characterising ingredient and during the mixing 98 %-2 % of the basic emulsion ingredient and 2 %-98 % of the characterising ingredient are processed/treated/finished in an appropriated temperature area of + 10 Grad Celsius to — 20 Grad Celsius according to the composition and the characterising features of the ingredients.

3. A process for the production of milk/meat products according to the claims 1 and 2, wherein a cutter or a vacuum cutter or a cutter/vacuum cutter with a cooling and freezing means are used as a main processing device.

4. Milk/meat products prepared according to claims 1-3, characterised by a composition of 2 %-50 % proteins, comprising meat- milk- or other proteins, 2 %-25 % lipids, comprising animal or vegetable lipids, 2 %-25 % carbohydrates, comprising milk-, vegetable- or other carbohydrates and remainder water.

5. Milk/meat products produced according to claims 1-3 comprising 8 %-18 % proteins, 2 %-9 % lipids as well as 2 %-9 % carbohydrates and remainder water.

6. Milk/meat products with a calorie content lower than 100 kcal/100 g product, a fatcontent of

EP 0 156 166 B1

approximately 3,5 %/100 g product and a cholesterolcontent of approximately 30-35 mg/100 g product prepared according to the claims 1-3 of approximately 60 parts of frozen lowfat milk- and/or whole milk ingredient (lower than 0,5 to 3,5 % fat) as basic emulsion and approximately 40 parts of frozen characterising ingredient, comprising approximately 80 % lean (preferably freshly slaughtered) beef or game meat (approximately 2 %-4 % fat) and approximately 20 % skimmed milk (approximately 0,5-1,5 % fat).

7. Use of a thoroughly homogenized and subsequently frozen basic emulsion comprising milk, milkpowder, lipids and if occasion arises further nutrients and water and being processed in a cutter or in an other appropriate, the structure changing, emulgating and homogenizing device according to claims 1-3 for the production of milkproducts, sausageproducts, fishproducts, pies/pastries, food stuffs or feed stuffs of any kind with improved taste/odour and nutritional value as well as with improved consistency/texture and storagealive as substitute for the usual and conventional use or mixtures of bacon/fat/water or mixtures of bacon/fat/water and separated milkproteins and other emulgators, binding agents, thickening agents and similar agents.

8. The use of a basic emulsion-ingredient according to the claims 1-3 in frozen condition and in a finely comminuted and/or coarsely comminuted form and/or in a form of structured parts for the production of feed stuffs or food stuffs of any kind and preferably for energy- and nutritional value adjustable foods comprising milk-, meat-, fish-, crustaceean-, vegetable-, fruit- or other food ingredients.

**Revendications**

1. Procédé de fabrication des aliments du lait-viande large naturels et avec l'énergie et valeur nutritive mis au point à base du lait, des produits du lait, de la viande, de produit de la viande, le cas échéant avec l'addition des produits de fruits, de produits de céréales et des autres produits d'aliments, ledit procédé étant caractérisé en ce qu'on les produits du lait viande sont préparées sans utilisation de matière initiale être chimique ou être préparé chimique et sans addition d'une fixateur, d'un émulgateur et d'une épaisseur, qu'une émulsion fondamental-mixture fondamentale ingrédient à base du lait ou à base d'une émulsion du lait avec de poudre du lait maigre et le cas échéant une composante lipide est traitée émulgée et homogénisée dans a cutter ou dans une autre dispositif émulgante et/ou homogeneant à fond, qu'on congèle à fond et qu'on concasser suivant l'émulsion fondamental qu'on entremêle une ou plusieurs de ses émulsions fondamentals dans une cutter ou dans un autre dispositif convenable avec une ingrédient caractérisante à base de viande et/ou du poisson et/ou du lait et/ou des céréales et/ou des légumes et/ou des fruits ou des autres produits alimentaires ou le cas échéant avec l'addition du sel, des épices et ou de matière du goût, et que ce produit du lait-viande est continué d'être travaillé dans une matière conventionelle en des produits, fraîche, des produits avec résistance limitée, des conserves, de produits congelés ou de produits séchés/lyophlisés.

2. Procédé suivant la revendication 1, caractérisé en ce qu'on la émulsion fondamentale et l'ingrédient caractérisant sont traité et mélangé de 98 % à 2 % de la émulsion fondamentale avec 2 %-98 % de l'ingrédient caractérisant dans un domaine de température convenable de + 10° Celsius à — 20° Celsius selon la composition et la particularité/caractère des émulsions et des ingrédients.

3. Procédé suivant la revendication 1 et 2, caractérisé en ce qu'on utilise un cutter vacuum ou un cutter/vacuum-cutter avec une dispositive pour rafrâchir et congeler comme un dispositif de traitée principale.

4. Produits du lait, de la viande préparé suivant les revendications 1-3, caractérisé en ce qu'on le produit ce compose de 2 % à 50 % protein, ce composé de la viande, du lait et des autres protein, de 2 % à 25 % lipides (graisse), composé de lipid animal et/ou des lipid végétél, de 2 % à 25 % des hydrate du carbone, composé de hydrate de carbone, du lait, du végétal ou des autres hydrat des carbon glucide et du reste l'eau.

5. Produit du lait, de la viande préparé suivant les revendications 1-3, ce composante de 8 % à 18 % protein, de 2 % à 9 % lipides, de 2 %-9 % hydrates carbon et reste l'eau.

6. Produits de lait, de la viande avec une teneur de calorie moins que 100 kcal/100 g produit, avec une teneur des lipides environ de 3,5 %/100 g produit, avec une teneur de cholestérine, environ de 30 mg-35 mg/100 g produits préparés suivant les revendications 1-3 environ de 60 parts de ingrédiente congélés du lait maigre et/ou du lait (0,5 à 3,5 % lipides) comme émulsion fondamental et environ 40 parts d'une ingrédient caractérisante congelés, se composant d'environ de 80 % viande très maigre (environ 2 % à 4 % lipides) et d'environ 20 % lait maigre (environ 0,5 % à 1,5 % lipides).

7. L'utilisation d'une émulsion fondamentale suivant les revendications 1-3 préparés ce qu'on homogénéise et congèle suivant du lait, du poudre du lait, des lipides et le cas échéant des autres produits alimentaires et de l'eau dans une cutter ou dans une l'autre dispositif propre pour changer la structure par émulger et homogéniser, pour la production des produit du lait, de produit des saucissons, des produits des poissons, des pâtées et des autres alimentaires de chaque sorte avec un goat et une valeur nutritive améliorée et aussi avec une consistance et une résistance améliorée comme remplacement pour l'autre conventionelle utilisation des mixture se composantes du lard, des lipides, de l'eau, de mixtures, du lard, du lipides, de l'eau et des protéines préparées et des autres émulgateur, fixateurs etc.

8. L'utilisation d'une émulsion fondamentale suivant les revendications 1-3 en forme congelé et en forme réduit au petits morceaux fines et/ou en forme briser à gros grains et/ou en forme des parts structure pour la préparation des produits alimentaires et de la nourriture des animaux et de préférence pour des produits alimentaires avec l'énergie et la valeur nutritive étant réglable se composant des éléments du lait, de la viande, des poissons, des crustacées, des légumes, des fruits et des autres parts des produits alimentaires.